# EUROPEAN PATENT APPLICATION

(11) **EP 4 834 623 A1**
(43) Date of publication of application: **04.11.2026**
(21) Application number: 26166594.7
(22) Date of filing: 23.03.2026
(51) Int. Cl.: B60K 7/00, B60K 17/04

(54) **INDEPENDENT DRIVING STRUCTURE FOR LEFT AND RIGHT WHEEL-SIDE MOTORS OF PURE ELECTRIC TRICYCLE**

(30) Priority: 28.04.2025 CN 202520840120 U
(71) Applicant: Zhejiang Xin Precision Machinery Co., Ltd., Taizhou, Zhejiang 318000 (CN)
(72) Inventor: JIN, Jianhua, Taizhou, 318000 (CN); YU, Wenyong, Taizhou, 318000 (CN); MA, Qiang, Taizhou, 318000 (CN)
(74) Representative: Metida

(57) **Abstract**

An independent driving structure for left and right wheel-side motors of a pure electric tricycle is disclosed, including a rear axle support. Both ends of the rear axle support are provided with a driving motor, and the driving motor is connected to a wheel hub. The driving motor includes a motor housing and a reducer housing. A stator assembly and a rotor assembly are arranged in the motor housing. A main shaft is connected to the rotor assembly. A fixed gear ring, a planetary gear carrier, a sun gear, and planetary gears rotatably connected to the planetary gear carrier are arranged in the reducer housing. The sun gear is connected to the main shaft. An output shaft is arranged on the planetary gear carrier, and the output shaft is connected to the wheel hub.

## Description

### Technical Field

The present disclosure belongs to the field of electric drive technologies, and more particularly relates to an independent driving structure for left and right wheel-side motors of a pure electric tricycle.

### Background

In the field of electric drive for pure electric tricycles, commonly used electric drive structures adopt a mid-mounted motor and a reducer on a rear axle. Power is transmitted to left and right driving wheels through a differential and transmission shafts. Hub motors are also adopted. Although the structure is simple and eliminates an intermediate transmission device, the hub motors have heavy weight, large moment of inertia, and low efficiency, which not only affects the operation performance of the entire vehicle but also increase material costs. For the mid-mounted motor, the power transmission path is relatively long, which affects the transmission efficiency and results in high manufacturing costs.

### Summary

In view of the shortcomings of the related art, the present disclosure provides an independent driving structure for left and right wheel-side motors of a pure electric tricycle, thereby greatly shortening a power transmission path and achieving a more compact structure. A driving force can still be provided to a vehicle even if a wheel hub on one side slips. Meanwhile, the assembly process and cost of a vehicle driving system are reduced.

To achieve the foregoing objectives, the present disclosure provides the following technical solution. An independent driving structure for left and right wheel-side motors of a pure electric tricycle includes a rear axle support. Both ends of the rear axle support are provided with a driving motor, and the driving motor is connected to a wheel hub. The driving motor includes a motor housing and a reducer housing. A stator assembly and a rotor assembly are arranged in the motor housing. A main shaft is connected to the rotor assembly. A fixed gear ring, a planetary gear carrier, a sun gear, and planetary gears rotatably connected to the planetary gear carrier are arranged in the reducer housing. The sun gear is connected to the main shaft. An output shaft is arranged on the planetary gear carrier, and the output shaft is connected to the wheel hub.

Further, a planetary gear shaft is fixed to the planetary gear carrier. The planetary gear is rotatably connected to the planetary gear shaft.

Further, the output shaft is in threaded connection with the wheel hub. An end of the output shaft passes through the wheel hub, and a fixing nut is in threaded connection with the passing end. A gasket is arranged between the fixing nut and the wheel hub.

Further, two bearings are arranged between the output shaft and the reducer housing. A spacer sleeve is arranged between the two bearings.

Further, a flange support corresponding to the motor housing is arranged on the rear axle support. The motor housing is connected to the flange support by a plurality of bolts.

Further, the reducer housing is connected to the motor housing by a plurality of bolts.

Further, a bearing is arranged between the main shaft and the motor housing.

Further, an integrated brake support is arranged on the reducer housing. A brake cam is rotatably connected to the brake support. A central shaft of the brake cam is connected to a brake cable. A brake shoe is hinged to the brake cam. The other end of the brake shoe is hinged to the brake support.

Compared with the related art, the present disclosure has the following beneficial effects: By arranging an integrated power system composed of a motor, a reducer, and a brake on either side of the rear axle support of the pure electric tricycle, all the wheel hubs are driven by independent driving systems, thereby greatly shortening a power transmission path and achieving a more compact structure. A driving force can still be provided to the vehicle even if the wheel hub on one side slips during traveling. Since the driving motor integrates the motor and the reducer, the assembly process and cost of a vehicle driving system can be greatly reduced.

### Brief Description of Figures

FIG. 1 is a schematic diagram of an independent driving structure for left and right wheel-side motors of a pure electric tricycle according to the present disclosure.
FIG. 2 is an enlarged schematic diagram of a single-side structure in an independent driving structure for left and right wheel-side motors of a pure electric tricycle according to the present disclosure.

Referential numerals: 1, rear axle support; 2, driving motor; 3, wheel hub; 4, motor housing; 5, reducer housing; 6, stator assembly; 7, rotor assembly; 8, main shaft; 9, fixed gear ring; 10, planetary gear carrier; 11, sun gear; 12, planetary gear; 13, output shaft; 14, planetary gear shaft; 15, fixing nut; 16, gasket; 17, spacer sleeve; 18, flange support; 19, brake support; 20, brake cam; and 21, brake shoe.

### Detailed Description

In the description of the present disclosure, it should be noted that orientation-related terms such as "center", "transverse (X)", "longitudinal (Y)", "vertical (Z)", "length", "width", "thickness", "upper", "lower", "front", "rear", "left", "right", "upright", "horizontal", "top", "bottom", "inner", "outer", "clockwise", and "counterclockwise" are used to indicate orientations and positional relationships based on the orientations and positional relationships shown in the accompanying drawings. These terms are used solely to facilitate the description of the present disclosure and simplify the description, and are not intended to indicate or imply that the referred apparatus or elements must have a particular orientation or be constructed and operated in a particular orientation. These terms should not be construed as limiting a specific scope of protection of the present disclosure.

Furthermore, terms such as "first" and "second" are used for descriptive purposes only and should not be interpreted as indicating or implying relative importance or implicitly specifying the quantity of technical features. Thus, features defined by "first" or "second" may explicitly or implicitly include one or more of such features. In the description of the present disclosure, the term "a number of" or "a plurality of" means two or more, unless explicitly defined otherwise.

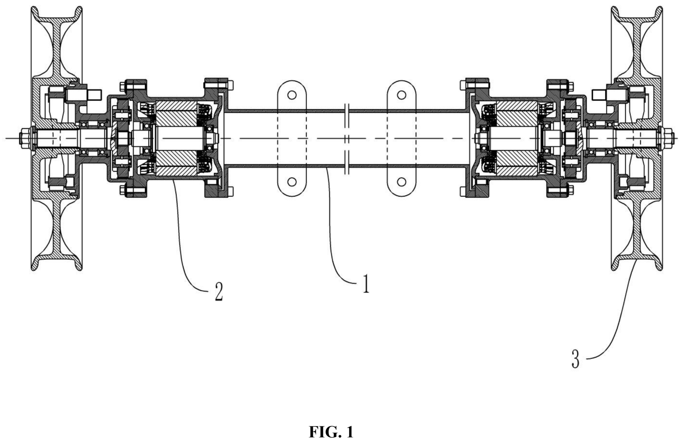

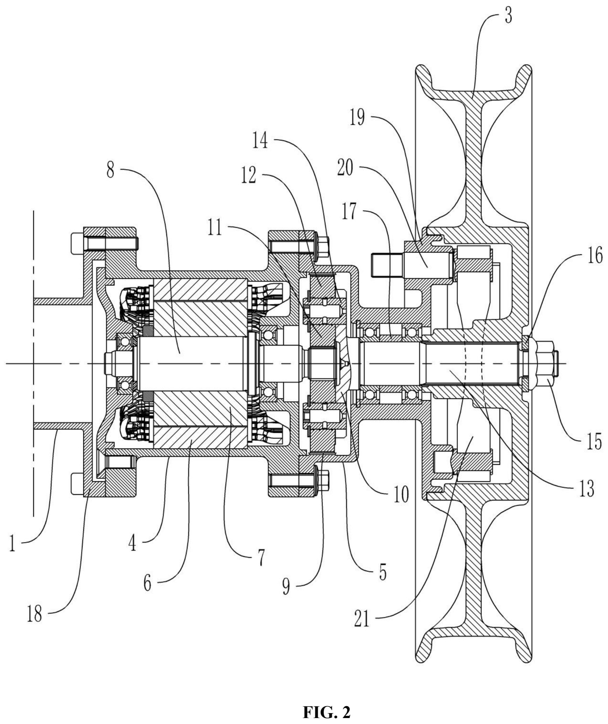

The present disclosure will be further described with reference to FIG. 1 and FIG. 2.

An independent driving structure for left and right wheel-side motors of a pure electric tricycle includes a rear axle support 1. Both ends of the rear axle support 1 are provided with a driving motor 2, and the driving motor 2 is connected to a wheel hub 3. The driving motor 2 includes a motor housing 4 and a reducer housing 5. A stator assembly 6 and a rotor assembly 7 are arranged in the motor housing 4. A main shaft 8 is connected to the rotor assembly 7. A fixed gear ring 9, a planetary gear carrier 10, a sun gear 11, and planetary gears 12 rotatably connected to the planetary gear carrier 10 are arranged in the reducer housing 5. The sun gear 11 is connected to the main shaft 8. An output shaft 13 is arranged on the planetary gear carrier 10, and the output shaft 13 is connected to the wheel hub 3.

As shown in FIG. 1 and FIG. 2, by arranging an integrated power system composed of a motor, a reducer, and a brake on either side of the rear axle support 1 of the pure electric tricycle, all the wheel hubs 3 are driven by independent driving systems, thereby greatly shortening a power transmission path and achieving a more compact structure. A driving force can still be provided to a vehicle even if the wheel hub 3 on one side slips during traveling. Since the driving motor 2 integrates the motor and the reducer, the assembly process and cost of a vehicle driving system can be greatly reduced.

As shown in FIG. 1 and FIG. 2, preferably in this embodiment, a planetary gear shaft 14 is fixed to the planetary gear carrier 10. The planetary gear 12 is rotatably connected to the planetary gear shaft 14.

As shown in FIG. 1 and FIG. 2, preferably in this embodiment, the output shaft 13 is in threaded connection with the wheel hub 3. An end of the output shaft 13 passes through the wheel hub 3, and a fixing nut 15 is in threaded connection with the passing end. A gasket 16 is arranged between the fixing nut 15 and the wheel hub 3.

As shown in FIG. 1 and FIG. 2, preferably in this embodiment, two bearings are arranged between the output shaft 13 and the reducer housing 5. A spacer sleeve 17 is arranged between the two bearings.

As shown in FIG. 1 and FIG. 2, preferably in this embodiment, a flange support 18 corresponding to the motor housing 4 is arranged on the rear axle support 1. The motor housing 4 is connected to the flange support 18 by a plurality of bolts.

As shown in FIG. 1 and FIG. 2, preferably in this embodiment, the reducer housing 5 is connected to the motor housing 4 by a plurality of bolts.

As shown in FIG. 1 and FIG. 2, preferably in this embodiment, a bearing is arranged between the main shaft 8 and the motor housing 4.

As shown in FIG. 1 and FIG. 2, preferably in this embodiment, an integrated brake support 19 is arranged on the reducer housing 5. A brake cam 20 is rotatably connected to the brake support 19. A central shaft of the brake cam 20 is connected to a brake cable. A brake shoe 21 is hinged to the brake cam 20. The other end of the brake shoe 21 is hinged to the brake support 19.

The foregoing description presents only preferred implementations of the present disclosure, and the scope of protection of the present disclosure is not limited to the foregoing embodiments. All technical solutions falling within the idea of the present disclosure shall be considered within the scope of protection of the present disclosure. It should be noted that those of ordinary skill in the art may make various modifications and refinements without departing from the principles of the present disclosure. Such modifications and refinements should also be regarded as falling within the scope of protection of the present disclosure.

## Claims

1. An independent driving structure for left and right wheel-side motors of a pure electric tricycle, comprising a rear axle support, wherein both ends of the rear axle support are provided with a driving motor, and the driving motor is connected to a wheel hub; the driving motor comprises a motor housing and a reducer housing; a stator assembly and a rotor assembly are arranged in the motor housing; a main shaft is connected to the rotor assembly; a fixed gear ring, a planetary gear carrier, a sun gear, and planetary gears rotatably connected to the planetary gear carrier are arranged in the reducer housing; the sun gear is connected to the main shaft; and an output shaft is arranged on the planetary gear carrier, and the output shaft is connected to the wheel hub.

2. The independent driving structure for left and right wheel-side motors of a pure electric tricycle according to claim 1, wherein a planetary gear shaft is fixed to the planetary gear carrier, and the planetary gear is rotatably connected to the planetary gear shaft.

3. The independent driving structure for left and right wheel-side motors of a pure electric tricycle according to claim 1, wherein the output shaft is in threaded connection with the wheel hub, an end of the output shaft passes through the wheel hub, a fixing nut is in threaded connection with the passing end, and a gasket is arranged between the fixing nut and the wheel hub.

4. The independent driving structure for left and right wheel-side motors of a pure electric tricycle according to claim 1, wherein two bearings are arranged between the output shaft and the reducer housing, and a spacer sleeve is arranged between the two bearings.

5. The independent driving structure for left and right wheel-side motors of a pure electric tricycle according to claim 1, wherein a flange support corresponding to the motor housing is arranged on the rear axle support, and the motor housing is connected to the flange support by a plurality of bolts.

6. The independent driving structure for left and right wheel-side motors of a pure electric tricycle according to claim 1, wherein the reducer housing is connected to the motor housing by a plurality of bolts.

7. The independent driving structure for left and right wheel-side motors of a pure electric tricycle according to claim 1, wherein a bearing is arranged between the main shaft and the motor housing.

8. The independent driving structure for left and right wheel-side motors of a pure electric tricycle according to claim 1, wherein an integrated brake support is arranged on the reducer housing, a brake cam is rotatably connected to the brake support, a central shaft of the brake cam is connected to a brake cable, a brake shoe is hinged to the brake cam, and the other end of the brake shoe is hinged to the brake support.
